# FASCICULE DE BREVET EUROPEEN

(11) **EP 1 113 847 B1**
(45) Date de publication et mention de la délivrance du brevet: **04.12.2002**
(21) Numéro de dépôt: 99929453.1
(22) Date de dépôt: 09.07.1999
(51) Int. Cl.: B01D 1/26, B01D 1/22, B01D 1/30, C02F 1/08, F28D 3/00

(54) **PROCEDE POUR LA DISTILLATION D'UN FLUIDE A TRANSFERT HORIZONTAL DE VAPEUR DANS LA ZONE DE CONDENSATION ET DISPOSITIF MODULAIRE DE MISE EN OEUVRE DU PROCEDE**
VERFAHREN ZUR DESTILLIERUNG EINES FLUIDS MITTELS HORIZONTAL-TRANSFER VON DÄMPFEN IN DIE KONSENSATIONSZONE UND MODULARE VORRICHTUNG ZUR DURCHFÜHRUNG DES VERFAHRENS
METHOD FOR DISTILLING A FLUID WITH HORIZONTAL VAPOUR TRANSFER INTO A CONDENSATION ZONE AND MODULAR DEVICE FOR IMPLEMENTING SAID METHOD

(30) Priorité: 24.07.1998 FR 9809668
(43) Date de publication de la demande: 11.07.2001
(73) Titulaire: Centre International de L'eau de Nancy ( NAN.C.I.E.), 54515 Vandoeuvre les Nancy Cedex (FR)
(72) Inventeur: LE GOFF, Pierre, F-54000 Nancy (FR); HORNUT, Jean-Marie, F-54840 Villers le Sec (FR); RENAUDIN, Viviane, F-54600 Villers les Nancy (FR)
(74) Mandataire: Poupon, Michel
(86) Numéro de dépôt international: FR9901674
(87) Numéro de publication internationale: WO00004968

(56) Documents cités:
- EP-A- 0 046 528
- EP-A- 0 276 176
- BE-A- 1 002 903
- DE-A- 2 722 288
- PATENT ABSTRACTS OF JAPAN vol. 005, no. 035 (C-046), 5 mars 1981 (1981-03-05) & JP 55 159802 A (SUMITOMO HEAVY IND LTD), 12 décembre 1980 (1980-12-12)

## Description

La présente invention concerne un procédé et un dispositif à structure modulaire pour la distillation d'un fluide, applicable notamment mais non limitativement au dessalement des eaux saumâtres et/ou marines.

Les techniques connues de dessalement sont classées en trois grandes familles, selon le procédé appliqué :
* les procédés faisant intervenir un changement de phase : la congélation et la distillation,
* les procédés utilisant des membranes : l'osmose inverse et l'électrodialyse,
* les procédés agissant sur les liaisons chimiques à savoir l'échange d'ions, l'extraction par solvants et la formation d'hydrates.

Parmi les techniques les plus éprouvées et qui ont atteint un stade industriel, on distingue les techniques membranaires telles que l'osmose inverse et l'électrodialyse et les procédés de distillation à détentes étagées ou à multiples effets :
* **l'osmose inverse** est un procédé de séparation de l'eau et des sels dissous au moyen de membranes sous l'action de la pression. Ce procédé fonctionne à température ambiante.
* **l'éléctrodialyse** est un procédé qui consiste à déminéraliser les eaux saumâtres et ce, par migration des différents ions à travers des membranes sélectives qui sont soumises à l'action d'un champ électrique. Ce champ résulte de l'application d'une différence de potentiel continue entre deux électrodes délimitant les membranes sélectives précitées.
* **le procédé de distillation à détentes étagées** est basé sur la distillation, de l'eau de mer préalablement chauffée à une température variant entre 80 et 120° C. Cette distillation résulte des détentes successives de l'eau de mer au sein d'une série de cellules.
* **le procédé de distillation à multiples effets** est basé sur le principe de l'évaporation sous vide, d'une partie de l'eau de mer préchauffée à une température variant entre 70 et 80° C. Cette évaporalion qui a lieu sur une surface d'échange contrairement à celle dans le procédé précédent où elle est assurée par détentes au sein des cellules, résulte du transfert de chaleur cédée, soit par la condensation de la vapeur (chaleur latente) provenant d'une chaudière, soit par refroidissement d'eau chaude émanant d'un récupérateur de chaleur.

La technique mise en oeuvre par l'invention entre dans cette dernière catégorie et est basée sur les technologies des échangeurs à films ruisselants sur plaques à multiples effets.

Un évaporateur rapide multi-usage de ce type est par exemple décrit dans la demande de brevet français FR 2 666 517.

Les installations de production d'eau faisant appel à cette dernière catégorie sont très utilisées à l'échelon mondial. Leur coût global en investissement et fonctionnement reste cependant supérieur à celui des deux autres procédés.

Le coût de l'investissement est lié pour plus de 50 % au distillateur lui-même.

Le document EP-A-0046528 décrit un procédé dans lequel le liquide à distiller débouche en partie haute d'une zone d'évaporation et les vapeurs produites sont transférées à travers un passage agencé dans une paroi de séparation.

La demanderesse s'est donc fixée pour objectif de concevoir un distillateur de structure entièrement nouvelle de façon à diminuer de façon importante le coût d'une installation.

Pour atteindre cet objectif, la demanderesse a eu l'idée de concevoir un distillateur modulaire qui fonctionne sur un procédé nouveau et qui résulte de l'assemblage d'un grand nombre de pièces élémentaires, simples, disponibles commercialement ou faciles à fabriquer en série et à faible coût, même dans un pays de faible technologie.

Pour atteindre son but la demanderesse a conçu une cellule élémentaire d'évaporation condensation pour distillateur à films ruisselants sur plaques à multiples effets, caractérisée en ce que :
- son volume est délimité par deux plaques métalliques formant les parois de la cellule et maintenues verticalement et séparées par un cadre-espaceur, ledit cadre espaceur étant partagé par un montant central longitudinal en deux zones distinctes sensiblement identiques et communiquant entre-elles, appelées zone d'évaporation et zone de condensation,
- ladite zone d'évaporation étant alimentée en fluide à distiller grâce à un circuit d'alimentation débouchant dans la partie supérieure de la zone d'évaporation, le fluide à distiller ruisselant en film mince sur les deux parois de la cellule,
- le liquide non évaporé ou concentrat en excès étant récupéré en partie basse de la zone d'évaporation par un circuit concentrat,
- le fluide distillé étant récupéré en partie basse de la zone de condensation par un circuit distillat,
- les deux zones d'évaporation et de condensation communiquent entre-elles par un ensemble de trous calibrés prévus dans le montant central.

Un moyen anti-écrasement étant éventuellement prévu à l'intérieur de la cellule si celle-ci est maintenue en dépression.

Selon une variante de réalisation, le distributeur est défini par un montant transversal percé de nombreux trous calibrés et fixé dans la partie supérieure de la cellule entre un montant du cadre espaceur et le montant central.

Selon une autre variante de réalisation, le distributeur est formé d'un tube percé de nombreux trous calibrés et disposé transversalement en partie supérieure de la zone d'évaporation.

A titre d'exemple, le moyen anti-écrasement est un grillage ondulé à très larges mailles.

De façon préférentielle, un matelas poreux est appliqué à l'intérieur de la zone d'évaporation contre le montant central et couvre la surface comportant les trous de communication.

De façon préférentielle également, la cellule élémentaire comporte un moyen promoteur de turbulence et stabilisateur de film ruisselant.

Un distillateur à films ruisselants sur plaques à multiples effets conforme à l'invention est caractérisé en ce qu'il est constitué d'au moins une cellule élémentaire selon les caractéristiques ci-dessus.

Selon un mode préférentiel de mise en oeuvre, un distillateur selon l'invention est constitué d'un ensemble de cellules élémentaires assemblées en série thermique, la zone de condensation d'une cellule d'ordre n chauffant la zone d'évaporation d'une cellule d'ordre (n + 1) de la série thermique, la zone d'évaporation de la première cellule de la série étant chauffée par une cellule de chauffage traversée par un fluide caloporteur extérieur, la zone de condensation de la dernière cellule de la série étant refroidie par une cellule de refroidissement traversée par un fluide frigoporteur.

En outre, les cellules élémentaires d'une série thermique sont montées en alternance selon deux plans parallèles.

Selon un autre mode préférentiel de mise en oeuvre, un distillateur se caractérise en ce que :
- il est constitué d'un ensemble de cascades assemblées en parallèle, chaque cascade étant constituée de cellules élémentaires assemblées en alternance en série thermique, selon des plans d'assemblage parallèles, chaque zone de condensation d'une cellule d'ordre n servant ainsi à chauffer la zone d'évaporation de deux cellules d'ordre n + 1 placées de part et d'autre, chaque cascade débutant par une cellule de chauffage et se terminant par une cellule de refroidissement,
- toutes les cellules de chauffage étant alimentées en parallèle par un circuit de fluide caloporteur et toutes les cellules de refroidissement étant alimentées en parallèle par un circuit de fluide frigoporteur.

Selon un mode particulier de mise en oeuvre, on peut prévoir un distillateur composé d'une seule cellule, dont la zone d'évaporalion est insérée entre deux cellules de chauffage et dont la zone de condensation est insérée entre deux cellules de refroidissement, l'ensemble étant entouré d'une couche de matériau calorifuge.

Quel que soit le mode de mise en oeuvre choisi, l'ensemble des cellules peut être maintenu en contact étanche par des tirants filetés entre des plaques extérieures d'assemblage et éventuellement pressées par des moyens de pressage.

L'originalité de l'invention réside également dans le procédé de fonctionnement du distillateur à une ou plusieurs zones d'évaporation et de zones de condensation, caractérisé en ce que :
- les zones d'évaporation et les zones de condensation sont disposées verticalement, et séparées par un montant central longitudinal
- le liquide à distiller débouche en partie haute de la zone d'évaporation, et ruisselle en film mince sur les parois d'une cellule
- les vapeurs produites dans la zone d'évaporation sont transférées horizontalement dans la zone de condensation à travers des trous calibrés du montant central
- le liquide condensé ruisselle verticalement le long des parois de la zone de condensation et s'évacue en partie basse de cette zone.

Les zones de condensation peuvent être maintenues en dépression pour favoriser le transfert horizontal des vapeurs d'une zone à l'autre.

On comprendra mieux l'invention à l'aide de la description qui suit l'aite en référence aux figures annexées suivantes :
- la **figure 1** est un schéma de principe d'une cellule élémentaire d'évaporation-condensation selon l'invention,
- la **figure 2** est un schéma de principe d'un appareil de distillation à multiples effets selon l'invention formé d'une batterie de x cellules selon la figure 1 montées en parallèle et y cellules décalées selon la figure 1 montées en série thermique,
- la **figure 3** est une section selon un plan longitudinal d'un premier mode de réalisation de l'invention,
- la **figure 4** est une vue en coupe selon un plan AA de la figure 3,
- la **figure 5** est une vue en coupe selon un plan BB de la figure 3 correspondant à un distillateur à cinq effets,
- la **figure 6** montre en coupe ct en détail les extrémités supérieures de trois cellules,
- la **figure 7** correspond à un distillateur selon l'invention comportant une seule cellule élémentaire,
- la **figure 8** est une vue en coupe selon un plan CC de la figure 7,
- la **figure 9** est une vue en coupe selon un plan DD de la figure 7,
- la **figure 10** montre en coupe verticale les cellules de chauffage et de refroidissement associées à la cellule élémentaire de la figure 7,
- la **figure 11** est une vue d'ensemble d'un distillateur modulaire composé de cellules selon l'invention,
- la **figure 12** montre en partie une coupe du distillateur de la figure 11 réalisée selon un plan vertical,
- la **figure 13** montre des parties d'une coupe du distillateur de la figure 11 réalisée selon un plan horizontal,
- la **figure 14** montre en vue de face le type de cadre espaccur utilisé sur le distillateur des figures 12 et 13,
- les **figures 15 et 16** montrent des variantes du garnissage poreux interne.

### Cellule élémentaire :

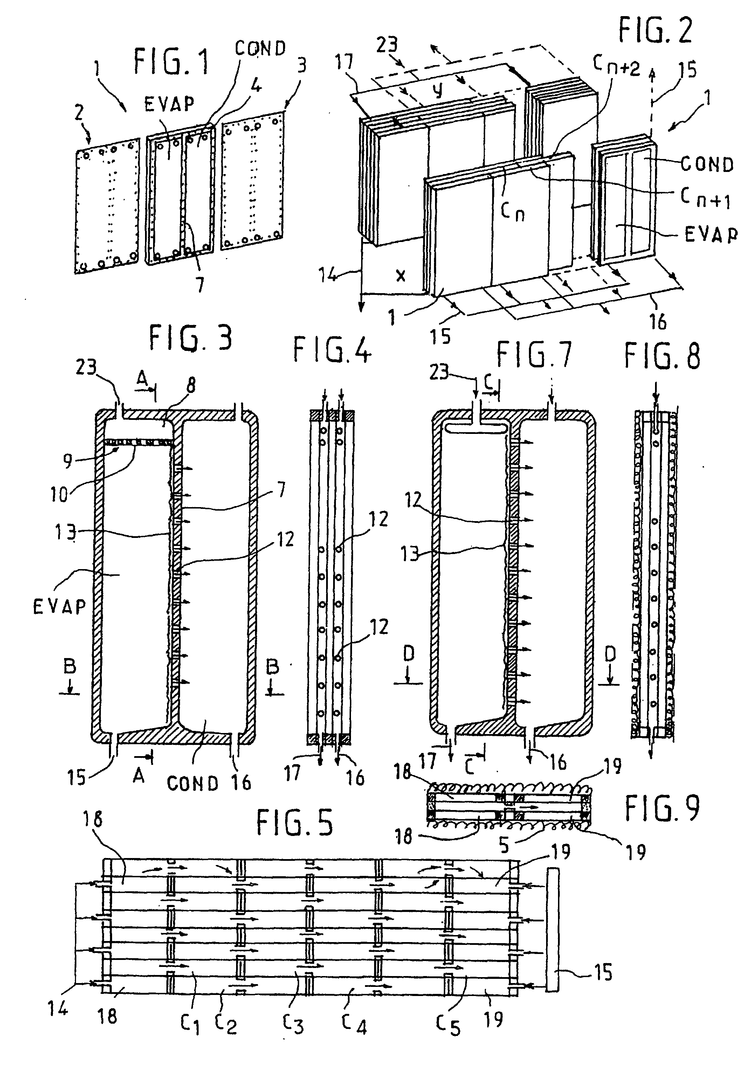

La cellule élémentaire (1) d'évaporation-condensation telle que montrée schématiquement à titre d'exemple non limitatif à la figure 1 est un parallélépipède de 2 cm d'épaisseur, contenu entre deux plaques métalliques (2, 3) de deux mètres de haut et de un mètre de large. Ces plaques sont séparées par un cadre-espaceur (4) en matière plastique (par exemple en polypropylène). Le cadre-espaceur est partagé en deux zones distinctes identiques, une zone d'évaporation (EVAP) et une zone de condensation (COND), grâce à un montant central longitudinal (7).

Dans son principe (Cf. figures 2 et 3), la zone d'évaporation (EVAP) de la cellule (1) est alimentée par le fluide à distiller grâce à un circuit d'alimentation (23) débouchant dans un distributeur (8) défini par exemple dans le cadre-espaceur par un montant transversal (9) percé de nombreux trous calibrés (10). Le fluide à distiller ruisselle en film mince sur les deux parois de la cellule. La cellule contient un garnissage poreux, par exemple un grillage ondulé (11) à très larges mailles (figure 6) destiné d'une part à éviter l'écrasement des cellules maintenues sous vide, et d'autre part à contribuer aux turbulences qui améliorent le transfert de chaleur du fluide en cours d'évaporation. On peut prévoir en outre sur les parois un moyen (6) intégré ou non auxdites parois, assurant les fonctions de promoteur de turbulence et stabilisateur de film ruisselant.

La zone de condensation de la cellule élémentaire a des dimensions identiques à la zone d'évaporation et ces deux zones communiquent au niveau du montant central (7) du cadre-espaceur par un ensemble de trous calibrés (12) pour le passage du fluide évaporé vers la zone de condensation. Un matelas poreux (13) (figures 3 et 7) est éventuellement placé devant ces trous et constitue une barrière anti-primage permettant d'éviter le passage de gouttelettes du fluide à distiller dans le condenseur. Le concentrat ou la saumure en excès est récupéré en partie basse de l'évaporateur par un circuit-concentrat (15) et le fluide distillé ou l'eau distillée est récupéré en partie basse par un circuit-distillat (16) (figure 2).

### Mode d'assemblage des cellules élémentaires :

Selon le principe de l'appareil modulaire selon l'invention, les cellules élémentaires d'évaporation-condensation sont assemblées en série thermique, c'est-à-dire que la zone de condensation des cellules d'ordre (n) chauffent les zones d'évaporation des cellules d'ordre (n + 1) de la même série de y cellules. Seules les premières et les dernières cellules sont respectivement chauffées par un fluide caloporteur extérieur (voir conduit caloporteur 14 de la figure 2) et refroidies par un fluide frigoporteur, comme le fluide à distiller par exemple (voir conduit frigoporteur 15 de la figure 2).

Le fluide caloporteur est par exemple de la vapeur d'eau et le fluide frigoporteur est par exemple de l'eau de mer.

Les cellules élémentaires d'évaporation-condensation sont également assemblées en x cascades à assembler en parallèle, chaque cascade comportant y cellules assemblées en série thermique.

Il n'y a pas de limite théorique au nombre x de cascades en parallèles ni au nombre y de cellules en série thermique dans une cascade.

A titre d'exemple non limitatif, la figure 5 montre quatre cascades assemblées en parallèle. Chaque cascade est formée de cinq cellules en série thermique et débute par une cellule de chauffage (18) et se termine par une cellule de refroidissement (19).

Toutes les cellules de chauffage (18) sont alimentées en parallèle par le circuit de fluide caloporteur (14) et toutes les cellules de refroidissement (19) sont alimentées en parallèle par le circuit de fluide frigoporteur (15).

Les y cellules en série thermique d'une cascade sont montées en alternance et selon deux plans d'assemblage parallèles. Dans le premier plan d'assemblage : la cellule de chauffage (18), les cellules C₂ et C₄, et la cellule de refroidissement (19) sont adjacentes (par contact entre les montants longitudinaux de leurs cadres). Dans le deuxième plan d'asemblage : les cellules C₁, C₃, C₅ sont adjacentes, par contact entre les montants longitudinaux de leurs cadres. En outre, la zone de condensation (COND-1 ou COND-2 ou COND-3... COND-4) d'une cellule Cₙ d'un des plans d'assemblage est appliquée, sur la totalité d'une de ses façades contre l'une des façades de la zone d'évaporation (EVAP-2 ou EVAP-3 ou EVAP-4 ou EVAP-5) de la cellule Cₙ₊₁ d'un plan d'assemblage de la même cascade ou de la cascade adjacente. Chaque zone de condensation d'une cellule d'ordre n (COND-n) servant ainsi à chauffer la zone d'évaporation de deux cellules d'ordre n + 1 (EVAP-n+1) placées de part et d'autre.

Les cellules de chauffage (18) et de refroidissement (19) ont la même épaisseur qu'une cellule élémentaire et sont moitié moins longues, une de leur façade est appliquée contre une façade de la zone d'évaporation (EVAP-1) d'une première cellule et respectivement contre une des façades de la zone de condensation (COND-5) d'une dernière cellule.

### Cas particuliers ou variantes :

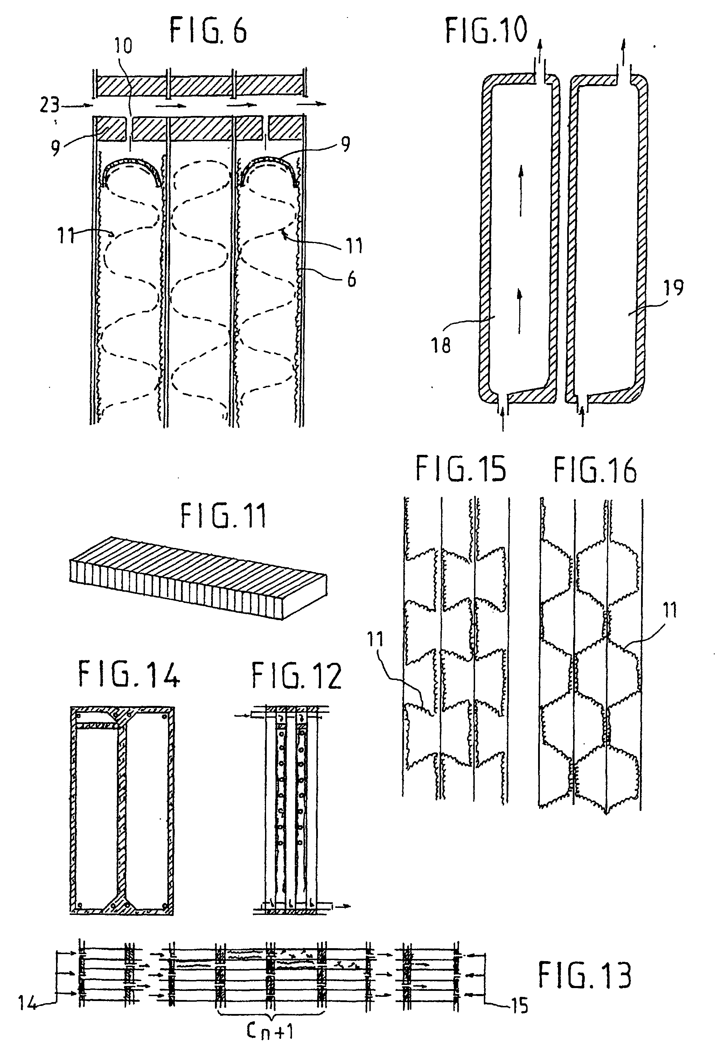

1°) Selon un autre exemple de réalisation représenté en figures 7 à 10, l'appareil selon l'invention comporte une seule cellule (1). Les coupes CC et DD montrent qu'une demi-cellule correspondant à la zone d'évaporation (EVAP) est insérée entre deux cellules de chauffage (18) et que la zone de condensation (COND) est insérée entre deux cellules de refroidissement (19), l'ensemble étant de préférence entouré d'une couche de matériau calorifuge (5).
2°) A titre d'exemple, la figure 11 montre les dimensions d'un distillateur modulaire selon l'invention produisant 500 tonnes par heure d'eau distillée, et qui se présente sous la forme extérieure d'un parallélépipède de 2 mètres de haut, 6 mètres de long, 155 mètres de large.
3°) A titre d'exemple non limitatif, les figures 12, 13, 14 montrent des ccllules élémentaires constituant par exemple le distillateur de la figure 11 ou celui de la figure 2.
   Sans sortir du cadre de l'invention, le cadre espaceur et les conduits d'alimentation peuvent prendre différentes formes.
   Le cadre-espaceur n'est pas nécessairement rectangulaire.
   Les différents conduits d'entrée et de sortie de fluide peuvent être dirigés horizontalement (figures 6,12,13,14) ou verticalement (figures 3,7,8) et intégrés ou non au cadre.
   De même, le distributeur (8) peut être absent ou réalisé sous différentes formes, par exemple sous forme d'un montant transversal perforé comme sur les figures 3 et 14, d'un tube perforé transversal comme sur la figure 7, ou d'une plaque perforée cintrée comme sur la figure 6.
   Le montant inférieur du cadre peut présenter une ou des pentes pour favoriser l'écoulement des fluides vers le bas.
4°) Le garnissage poreux (11) peut présenter lui aussi différentes conformations, voir les figures 6, 15 et 16 à titres d'exemples non limitatifs.
5°) Bien entendu, il est également possible de réaliser des cellules élémentaires à partir de deux demi-cellules indépendantes et structurellement identiques, avec un ensemble de trous sur un de leur montant vertical. Il suffit de les accoler et de mettre en coïncidence lesdits trous de communication. Le mode d'assemblage est alors le même que celui décrit précédemment et le concept de cellule élémentaire, dans la description et les revendications, couvre tous les deux modes de réalisation.

### Particularités du distillateur :

Les avantages d'un distillateur selon l'invention sont notamment :
* Sa structure modulaire : elle résulte de l'assemblage d'un très grand nombre de pièces élémentaires, simples, disponibles commercialement ou faciles à fabriquer en grande série à faible coût. Les mêmes pièces élémentaires pourront être utilisées pour constituer des distillateurs ayant des capacités de production variant dans une très large gamme dans un rapport de 1 à 10 000.
* Ces pièces élémentaires sont principalement :
   - des tôles planes, de dimensions classiques, sans aucune soudure ni usinage complexe. Elles pourront donc être éventuellement composées de matériaux rares : titane, tantale et même plastiques armées mouillables...
   - des cadres-espaceurs de faible épaisseur (par exemple 2 cm), en métal ou en matière plastique (polyéthylène ou polypropylène...), leur forme est variable en fonction des critères d'optimisation ou des contraintes de fabrication,
   - des plaques extérieures d'assemblage, avec des tirants filetés (qui pourront être en acier doux, avec usinage très grossier) ou de simples tiges de positionnement, maintenues si nécessaire par des moyens de pressage appropriés.
   - des tuyauteries d'alimentation, d'évacuation et de connexions des cellules élémentaires, de dimensions normalisées, également fabriquées en grande série.
* Ces pièces élémentaires seront aisément transportables à faible coût afin d'être assemblées sur place sans aucune soudure, par la main d'oeuvre locale. L'ensemble sera facilement démontable pour inspection et nettoyages périodiques. Pour faciliter le démontage et la maintenance, on peut prévoir un système de déplacement par exemple des rails horizontaux sur lesquels on peut faire coulisser un ensemble de cellules pour intervenir en un plan donné du distillateur.
* Un distillateur, même de très grande capacité, se présentera comme un monobloc massif ne nécessitant aucune charpente coûteuse.
* La manutention, le transport et la mise en oeuvre (assemblage, connexions, etc...) de cellules élémentaires de quelques dizaines de kg n'ont rien de comparable avec ce qui est nécessaire dans les installations existantes pour des éléments de quelques dizaines de tonnes.

## Revendications

1. Procédé de distillation d'un fluide, applicable notamment mais non limitativement au dessalement des eaux saumâtres et/ou marines, du type à films ruisselants sur plaques à multiples effets et comportant une cellule avec une ou plusieurs zones d'évaporation et de zones de condensation, **caractérisé en ce que** :
- les zones d'évaporation (EVAP) et les zones de condensation (COND) sont disposées verticalement, et séparées par un montant central longitudinal
- le liquide à distiller débouche en partie haute de la zone d'évaporation (EVAP), et ruisselle en film mince sur les parois d'une cellule
- les vapeurs produites dans la zone d'évaporation (EVAP) sont transférées horizontalement dans la zone de condensation (COND) à travers des trous calibrés du montant central
- le liquide condensé ruisselle verticalement le long des parois de la zone de condensation et s'évacue en partie basse de cette zone.

2. Procédé selon la revendication 1, **caractérisé en ce que** les zones de condensation sont maintenues en dépression.

3. Cellule élémentaire (1) pour la mise en oeuvre du procédé selon l'une des revendications 1 à 2, **caractérisée en ce que** :
- son volume est délimité par deux plaques métalliques (2,3) maintenues verticalement et séparées par un cadre-espaceur, ledit cadre espaceur étant partagé par un montant central longitudinal en deux zones distinctes sensiblement identiques et communiquant entre-elles, appelées zone d'évaporation (EVAP) et zone de condensation (COND),
- ladite zone d'évaporation (EVAP) étant alimentée en fluide à distiller grâce à un circuit d'alimentation (23) débouchant dans la partie supérieure de la zone d'évaporation (EVAP), le fluide à distiller ruisselant en film mince sur les deux parois de la cellule,
- le liquide non évaporé ou concentrât en excès étant récupéré en partie basse de la zone d'évaporation (EVAP) par un circuit concentrat (15),
- le fluide distillé étant récupéré en partie basse de la zone de condensation (COND) par un circuit distillat (16),
- les deux zones d'évaporation et de condensation communiquant entre-elles par un ensemble de trous calibrés (12) prévus dans le montant central (7).

4. Cellule élémentaire (1) selon la revendication 3, **caractérisée en ce que** la cellule est maintenable en dépression.

5. Cellule élémentaire (1) selon l'une quelconque des revendications 3 à 4, **caractérisée en ce que** le circuit d'alimentation débouche par un distributeur (8) défini par un montant transversal (9) percé de nombreux trous calibrés et fixé dans la partie supérieure de la cellule entre un montant du cadre espaceur et le montant central (7).

6. Cellule élémentaire (1) selon l'une quelconque des revendications 3 à 4, **caractérisée en ce que** le circuit d'alimentation débouche par un distributeur (8) formé d'un tube percé de nombreux trous calibrés et disposé transversalement en partie supérieure de la zone d'évaporation.

7. Cellule élémentaire (1) selon la revendication 4, **caractérisée en ce qu'**un moyen anti-écrasement est prévu à l'intérieur de la cellule.

8. Cellule élémentaire (1) selon la revendication 7, **caractérisée en ce que** le moyen anti-écrasement est un grillage ondulé à très larges mailles.

9. Cellule élémentaire (1) selon l'une quelconque des revendications 4 à 8, **caractérisée en ce qu'**elle comporte un matelas poreux (13) appliqué à l'intérieur de la zone d'évaporation contre le montant central et couvrant la surface comportant les trous de communication (12).

10. Cellule élémentaire (1) selon l'une quelconque des revendications 2 à 9, **caractérisée en ce qu'**elle comporte en outre un moyen (6) promoteur de turbulence et stabilisateur de film ruisselant.

11. Distillateur à films ruisselants sur plaques à multiples effets, **caractérisé en ce qu'**il est constitué d'au moins une cellule élémentaire selon l'une des revendications 3 à 10.

12. Distillateur selon la revendication 11, **caractérisé en ce qu'**il est constitué d'un ensemble de y cellules élémentaires assemblées en série thermique, la zone de condensation d'une cellule d'ordre n chauffant la zone d'évaporation d'une cellule d'ordre (n + 1) de la série thermique, la zone d'évaporation de la première cellule de la série étant chauffée par une cellule de chauffage (18) traversée par un fluide caloporteur extérieur, la zone de condensation de la dernière cellule de la série étant refroidie par une cellule de refroidissement (19) traversée par un fluide frigoporteur.

13. Distillateur selon la revendication 12, **caractérisé en ce que** les y cellules élémentaires d'une série thermique sont montées en alternance selon deux plans parallèles.

14. Distillateur selon la revendication 11, **caractérisé en ce que** :
- il est constitué d'un ensemble de x cascades assemblées en parallèle, chaque cascade étant constituée de y cellules élémentaires assemblées en alternance en série thermique selon des plans d'assemblage parallèles, chaque zone de condensation (CONDₙ) d'une cellule d'ordre n servant ainsi à chauffer la zone d'évaporation (EVAPₙ₊₁) de deux cellules d'ordre n + 1 placées de part et d'autre et chaque cascade débutant par une cellule de chauffage (18) et se terminant par une cellule de refroidissement (19),
- toutes les cellules de chauffage (18) étant alimentées en parallèle par un circuit de fluide caloporteur (14) et toutes les cellules de refroidissement étant alimentées en parallèle par un circuit de fluide frigoporteur (15).

15. Distillateur selon la revendication 11, **caractérisé en ce qu'**il est composé d'une seule cellule (1), dont la zone d'évaporation (EVAP) est insérée entre deux cellules de chauffage (18) et dont la zone de condensation (COND) est insérée entre deux cellules de refroidissement (19), l'ensemble étant entouré d'une couche de maténau calorifuge (5).

16. Distillateur selon l'une des revendications 11 à 15, **caractérisé en ce que** l'ensemble des cellules est maintenu en contact étanche entre des plaques extérieures d'assemblage.

17. Distillateur selon l'une des revendications 11 à 16, **caractérisé en ce qu'**il est modulaire, c'est-à-dire réalisé uniquement à partir d'un jeu de pièces élémentaires, les mêmes pièces élémentaires pouvant être utilisées pour constituer des distillateurs de capacités différentes prédéterminées.

18. Distillateur selon l'une des revendications 11 à 17, **caractérisé en ce qu'**il comporte en outre un système de déplacement des cellules.

## Claims

1. Method of distilling a fluid, which is applicable more especially, but not in a limiting manner, to the desalination of brackish and/or sea waters, of the type having films flowing over multipurpose plates and comprising a cell with one or more evaporation zones and condensation zones, **characterised in that**:
- the evaporation zones (EVAP) and the condensation zones (COND) are disposed vertically, and are separated by a longitudinal central strut;
- the liquid to be distilled emerges in the top portion of the evaporation zone (EVAP), and flows in a thin film over the walls of a cell;
- the vapours produced in the evaporation zone (EVAP) are transferred horizontally into the condensation zone (COND) through calibrated holes in the central strut; and
- the condensed liquid flows vertically along the walls of the condensation zone and is removed in the bottom portion of this zone.

2. Method according to claim 1, **characterised in that** the condensation zones are maintained at low pressure.

3. Elementary cell (1) for accomplishing the method according to one of claims 1 to 2, **characterised in that**:
- its volume is defined by two metal plates (2, 3), which are maintained vertically and are separated by a spacer member, said spacer member being divided, by a longitudinal central strut, into two distinct, substantially identical zones which communicate with each other, called the evaporation zone (EVAP) and the condensation zone (COND),
- said evaporation zone (EVAP) being supplied with fluid to be distilled by means of a feed circuit (23) which emerges in the upper portion of the evaporation zone (EVAP), the fluid to be distilled flowing in a thin film over the two walls of the cell,
- the non-evaporated liquid or excess concentrate being recovered in the bottom portion of the evaporation zone (EVAP) by a concentrate circuit (15),
- the distilled fluid being recovered in the bottom portion of the condensation zone (COND) by a distillate circuit (16), and
- the two zones of evaporation and condensation communicating with each other by an assembly of calibrated holes (12) provided in the central strut (7).

4. Elementary cell (1) according to claim 3, **characterised in that** the cell is maintainable at low pressure.

5. Elementary cell (1) according to any of claims 3 and 4, **characterised in that** the feed circuit emerges through a distributor (8) defined by a transverse strut (9) pierced by numerous calibrated holes and secured in the upper portion of the cell between a strut of the spacer member and the central strut (7).

6. Elementary cell (1) according to any of claims 3 to 4, **characterised in that** the feed circuit emerges through a distributor (8) formed from a tube pierced with numerous calibrated holes and disposed transversely in the upper portion of the evaporation zone.

7. Elementary cell (1) according to claim 4, **characterised in that** an anti-crushing means is provided inside the cell.

8. Elementary cell (1) according to claim 7, **characterised in that** the anti-crushing means is an undulatory lattice with a very wide mesh.

9. Elementary cell (1) according to any of claims 4 to 8, **characterised in that** it comprises a porous mat (13), applied to the interior of the evaporation zone against the central strut and covering the surface which contains the communication holes (12).

10. Elementary cell (1) according to any of claims 2 to 9, **characterised in that** it also comprises a means (6) for promoting turbulence and stabilising the flowing film.

11. Distiller having films flowing over multipurpose plates, **characterised in that** it comprises at least one elementary cell according to one of claims 3 to 10.

12. Distiller according to claim 11, **characterised in that** it comprises an assembly of y elementary cells assembled in a thermal series, the condensation zone of a cell of the order n heating the evaporation zone of a cell of the order (n + 1) in the thermal series, the evaporation zone of the first cell in the series being heated by a heating cell (18) traversed by an external heat-carrying fluid, the condensation zone of the last cell in the series being cooled by a cooling cell (19) traversed by a cold-carrying fluid.

13. Distiller according to claim 12, **characterised in that** the y elementary cells of a thermal series are mounted alternately along two parallel planes.

14. Distiller according to claim 11, **characterised in that**:
- it comprises an assembly of x cascades assembled in parallel, each cascade comprising y elementary cells assembled alternately in thermal sequence along parallel assembly planes, each condensation zone (CONDₙ) of one cell of the order n thereby serving to heat the evaporation zone (EVAPₙ₊₁) of two cells of the order n + 1, placed on each side, and each cascade commencing with a heating cell (18) and terminating with a cooling cell (19),
- all of the heating cells (18) being supplied in parallel by a circuit of heat-carrying fluid (14), and all of the cooling cells being supplied in parallel by a circuit of cold-carrying fluid (15).

15. Distiller according to claim 11, **characterised in that** it is made up of a single cell (1), the evaporation zone (EVAP) of which is inserted between two heating cells (18) and the condensation zone (COND) of which is inserted between two cooling cells (19), the assembly being surrounded by a layer of insulating material (5).

16. Distiller according to one of claims 11 to 15, **characterised in that** the assembly of the cells is kept in tight contact between external assembly plates.

17. Distiller according to one of claims 11 to 16, **characterised in that** it is modular, i.e. produced solely from a set of elementary parts, the same elementary parts being able to be used to make up distillers of predetermined different capacities.

18. Distiller according to one of claims 11 to 17, **characterised in that** it also comprises a system for displacing the cells.

## Patentansprüche

1. Verfahren zur Destillation eines Fluids, insbesondere, jedoch nicht ausschließlich, anwendbar zur Entsalzung von Brackwasser und/oder Wasser für die Marine, bei dem über in mehreren Stufen angeordneten Platten Filme rinnen, und welches eine Zelle mit einer Vielzahl von Verdampfungszonen und Kondensationszonen einschließt, **dadurch gekennzeichnet, dass**
- die Verdampfungszonen (EVAP) und die Kondensationszonen (COND) vertikal angeordnet und durch eine zentrale und längsverlaufende Strebe voneinander getrennt sind,
- die zu destillierende Flüssigkeit im oberen Bereich der Verdampfungszone (EVAP) einmündet und als dünner Film entlang der Wände einer Zelle rinnt,
- die in der Verdampfungszone (EVAP) erzeugten Dämpfe horizontal über kalibrierte Bohrungen der zentralen Strebe in die Kondensationszone (COND) geleitet werden und
- die kondensierte Flüssigkeit vertikal entlang der Wände der Kondensationszone rinnt und im unteren Bereich dieser Zone abgezogen wird.

2. Verfahren nach Anspruch 1, **dadurch gekennzeichnet, dass** in den Kondensationszonen Unterdruck aufrechterhalten wird.

3. Grundzelle (1) zur Ausführung des Verfahrens nach einem der Ansprüche 1 bis 2, **dadurch gekennzeichnet, dass**
- ihr Volumen durch zwei senkrecht ausgerichtete und durch einen Distanzrahmen voneinander getrennte Platten (2, 3) aus Metall begrenzt ist, wobei der genannte Distanzrahmen durch eine zentrale, längsverlaufende Strebe in zwei im wesentlichen identische, separate und miteinander in Verbindung stehende Zonen unterteilt ist, die Verdampfungszone (EVAP) und Kondensationszone (COND) genannt werden,
- dass die genannte Verdampfungszone (EVAP) mit zu destillierender Flüssigkeit dank einer Versorgungsleitung (23) versorgt wird, die in einem oberen Bereich der Verdampfungszone (EVAP) mündet, wobei die zu destillierende Flüssigkeit als dünner Film über die beiden Wände der Zelle rinnt,
- dass die nicht verdampfte Flüssigkeit oder das überschüssige Konzentrat im unteren Bereich der Verdampfungszone (EVAP) mittels einer Konzentratleitung (15) zurückgewonnen wird,
- dass die destillierte Flüssigkeit im unteren Bereich der Kondensationszone (COND) mittels einer Destillationsleitung (16) zurückgewonnen wird und
- dass die Verdampfungszone und die Kondensationszone miteinander über kalibrierte Bohrungen (12) in Verbindung stehen, die in der zentralen Strebe (7) vorgesehen sind.

4. Grundzelle (1) nach Anspruch 3, **dadurch gekennzeichnet, dass** die Zelle unter Unterdruck gehalten werden kann.

5. Grundzelle (1) nach einem der Ansprüche 3 bis 4, **dadurch gekennzeichnet, dass** die Versorgungsleitung in einen Verteiler (8) mündet ist, der durch einen Querträger (9) gebildet ist, welcher mittels einer Anzahl von kalibrierten Bohrungen durchlöchert und im oberen Bereich der Zelle zwischen einer Strebe des Distanzrahmens und der zentralen Strebe (7) angeordnet ist.

6. Grundzelle (1) nach einem der Ansprüche 3 bis 4, **dadurch gekennzeichnet, dass** die Versorgungsleitung in einen Verteiler (8) mündet ist, der aus einem durch zahlreiche kalibrierte Bohrungen gelochten Rohr gebildet ist und quer im oberen Bereich der Verdampfungszone angeordnet ist.

7. Grundzelle (1) nach Anspruch 4, **dadurch gekennzeichnet, dass** ein Mittel gegen ein Eindrücken im Inneren der Zelle vorgesehen ist.

8. Grundzelle (1) nach Anspruch 7, **dadurch gekennzeichnet, dass** das Mittel gegen ein Eindrücken ein gewelltes Gitter mit sehr großen Maschen ist.

9. Grundzelle (1) nach einem der Ansprüche 4 bis 8, **dadurch gekennzeichnet, dass** sie eine poröse Matte (13) enthält, die im Inneren der Verdampfungszone an der zentralen Strebe angebracht ist und die Fläche abdeckt, welche die Bohrungen (12) zur gegenseitigen Verbindung aufweist.

10. Grundzelle (1) nach einem der Ansprüche 2 bis 9, **dadurch gekennzeichnet, dass** sie weiterhin ein Mittel (6) zum Fördern der Turbulenz und Stabilisieren des rinnenden Films aufweist.

11. Destillateur, bei dem Filme an mehreren Stufen von Platten herunterrinnen, **dadurch gekennzeichnet, dass** er aus zumindest einer Grundzelle nach einem der Ansprüche 3 bis 10 besteht.

12. Destillateur nach Anspruch 11, **dadurch gekennzeichnet, dass** er aus einer Anordnung von y Grundzellen besteht, die thermisch in Serie angeordnet sind, wobei die Kondensationszone einer Zelle der Reihenfolge n die Verdampfungszone einer Zelle der Reihenfolgen (n + 1) der thermischen Serie beheizt und die Verdampfungszone der ersten Zelle der Serie von einer Heizzelle (18) beheizt wird, über die eine externe Wärmeübertragungsflüssigkeit quer strömt und wobei die Kondensationszone der letzten Zelle der Serie von einer Kühlzelle (19) gekühlt wird, über die eine Kühlflüssigkeit quer strömt.

13. Destillateur nach Anspruch 12, **dadurch gekennzeichnet, dass** die y Grundzellen einer thermischen Serie aufeinanderfolgend in zwei parallelen Ebenen montiert sind.

14. Destillateur nach Anspruch 11, **dadurch gekennzeichnet, dass**
- er aus einer Anordnung von x parallel zueinander angeordneten Kaskaden besteht, wobei jede Kaskade aus y aufeinanderfolgenden Grundzellen besteht, die in thermischer Serie in parallelen Ebenen zusammengesetzt sind, und wobei jede Kondensationszone (CONDₙ) einer Zelle der Reihenfolge n auf diese Weise dazu dient, die Verdampfungszone (EVAPₙ₊₁) von zwei hintereinander angeordneten Zellen der Reihenfolge n+1 zu beheizen, und wobei jede Kaskade mit einer Heizzelle (18) beginnt und mit einer Kühlzelle (19) endet und dass
- alle diese Heizzellen (18) parallel zueinander an einer Leitung für Wärmeträgerflüssigkeit (14) angeschlossen sind und dass alle Kühlzellen parallel zueinander mit einer Leitung für Kühlflüssigkeit (15) versorgt sind.

15. Destillateur nach Anspruch 11, **dadurch gekennzeichnet, dass** er aus einer einzigen Zelle (1) besteht, bei der die Verdampfungszone (EVAP) zwischen zwei Heizzellen (18) und die Kondensationszone (COND) zwischen zwei Kühlzellen (19) eingeschoben ist und dass die Anordnung von einer Schicht aus Wärmeisolationsmaterial (5) umschlossen ist.

16. Destillateur nach einem der Ansprüche 11 bis 15, **dadurch gekennzeichnet, dass** die Anordnung von Zellen zwischen äußeren Platten der Anordnung dichtend aneinander gehalten ist.

17. Destillateur nach einem der Ansprüche 11 bis 16, **dadurch gekennzeichnet, dass** er modular aufgebaut ist, also einzig aus einem Satz von Grundteilen gebildet ist, wobei diese Grundteile dazu benutzt werden können, Destillateure mit vorherbestimmter, unterschiedlicher Leistung zu bilden.

18. Destillateur nach einem der Ansprüche 11 bis 17, **dadurch gekennzeichnet dass** er weiterhin ein System für das Umsetzen von Zellen aufweist.
